# EUROPÄISCHE PATENTSCHRIFT

(11) **EP 4 570 487 B1**
(45) Veröffentlichungstag und Bekanntmachung des Hinweises auf die Patenterteilung: **20.05.2026**
(21) Anmeldenummer: 24211056.7
(22) Anmeldetag: 06.11.2024
(51) Int. Cl.: B30B 1/18, B30B 15/00, B23P 19/02, H02K 7/06, H02K 11/24

(54) **ELEKTROMECHANISCHES FÜGEMODUL**
ELECTROMECHANICAL JOINING MODULE
MODULE D'ASSEMBLAGE ÉLECTROMÉCANIQUE

(30) Priorität: 11.12.2023 EP 23215592
(43) Veröffentlichungstag der Anmeldung: 18.06.2025
(73) Patentinhaber: Kistler Holding AG, 8408 Winterthur (CH)
(72) Erfinder: Schneider, Jochen, 73614 Schorndorf (DE); Tepsic, Stanko, 73614 Schorndorf (DE)

(56) Entgegenhaltungen:
- EP-A1- 2 099 584
- WO-A1-2011/009223
- WO-A1-2020/020832
- US-B1- 6 293 155

## Beschreibung

### Technisches Gebiet

Die Erfindung betrifft ein elektromechanisches Fügemodul nach dem Oberbegriff des unabhängigen Anspruches.

### Stand der Technik

Elektromechanische Fügemodule werden in der industriellen Fertigung für vielfältige Montage- und Fügeprozesse wie Prägen, Stanzen, Nieten, Clinchen, usw. eingesetzt. Ein elektromechanisches Fügemodul weist einen elektrischen Motor, einen Gewindetrieb, einen Stössel und einen Kraftaufnehmer auf. Der elektrische Motor ist mit dem Gewindetrieb in Wirkverbindung und eine Drehbewegung des elektrischen Antriebs wird vom Gewindetrieb in eine Linearbewegung gewandelt. Der Stössel und der Kraftaufnehmer sind am Gewindetrieb angebracht und werden mit der Linearbewegung verfahren. Sie werden über eine Hublänge von mehreren 100 mm linear verfahren. Für eine effiziente Fertigung weist das elektromechanische Fügemodul eine grosse Verfahrgeschwindigkeit von rund 400 mm/s, eine hohe Hubzahl von über 10 Hübe/min und eine hohe Wiederholgenauigkeit von 0.01 mm auf. Der Kraftaufnehmer misst die vom Stössel aufgebrachte Kraft über mehrere Grössenordnungen. Er erzeugt für die gemessene Kraft Messdaten. Die Messdaten haben eine Messgenauigkeit von 0.5 %.

Ein solches elektromechanisches Fügemodul ist aus der Schrift WO2011009223A1 bekannt. Der elektrische Motor und der Gewindetrieb bilden eine Antriebseinheit. Die Antriebseinheit weist einen Stator auf. Der Stator ist ortsfest. Der Stössel ist relativ zum Stator linear verfahrbar. Der Stössel weist ein von der Antriebseinheit abgewandtes Stösselende auf. Der Kraftaufnehmer ist am Stösselende angebracht.

Gemäss der Lehre der Schrift WO2011009223A1 weist der Stössel hierzu eine Stösselelektronik und eine Stösselspule auf. Die Stösselspule erstreckt sich über die gesamte Hublänge. Sie verfügt über eine einzige Windung und liegt im Stössel in einer Nut. Der Stator weist eine Statorelektronik und eine Statorspule auf. Die Statorspule ist U-förmig und bleibt beim linearen Verfahren nahe der Stösselspule angeordnet. Die Stösselelektronik und die Statorelektronik sind geeignet, die Messdaten per Nahfeldtelemetrie von der Stösselspule zur Statorspule zu übertragen. Dabei erfolgt eine induktive Kopplung zwischen der Stösselspule und der Statorspule.

Die vorliegende Erfindung stellt sich die Aufgabe, die aus der Schrift WO2011009223A1 bekannte Übertragung der Messdaten in der Verfügbarkeit zu verbessern, konstruktiv zu vereinfachen und kostengünstig zu realisieren.

### Darstellung der Erfindung

Diese Aufgabe wird durch die Merkmale des unabhängigen Anspruches gelöst.

Die Erfindung betrifft ein elektromechanisches Fügemodul zum Aufbringen einer Kraft; mit einer Antriebseinheit und einem Stössel, welcher Stössel an der Antriebseinheit angebracht ist und von der Antriebseinheit linear verfahrbar ist; mit einem Kraftaufnehmer, welcher am Stössel angebracht ist und die aufgebrachte Kraft misst und für die gemessene Kraft Messwerte erzeugt, mit einem Stator, welcher ortsfest ist, welcher Stössel und welcher Kraftaufnehmer relativ zum Stator über eine Hublänge linear verfahrbar sind welcher Stössel eine Stösselelektronik und eine Stösselspule aufweist; welcher Stator eine Statorelektronik und eine Statorspule aufweist; welche Stösselspule beim linearen Verfahren nahe der Statorspule angeordnet bleibt; welche Stösselelektronik und welche Statorelektronik geeignet sind, die Messwerte als Messdaten per Nahfeldtelemetrie von der Stösselspule zur Statorspule zu übertragen; wobei sich die Statorspule über die gesamte Hublänge erstreckt.

Im Unterschied zum elektromechanischen Fügemodul der Schrift WO2011009223A1 ist es im erfindungsgemässen elektromechanischen Fügemodul die Statorspule, welche sich über die gesamte Hublänge erstreckt.

Dies hat mehrere Vorteile:
a. Dadurch, dass im Stössel nun kein Platz mehr für die Anordnung einer sich über die gesamte Hublänge erstreckende Stösselspule benötigt wird, gewinnt der Stössel mechanisch an Stabilität. Die Nut fällt weg. Der Gewinn an mechanischer Stabilität reduziert die Verbiegung des Stössels beim Aufbringen der Kraft. Dies wiederum vermindert die Wahrscheinlichkeit, dass sich die Statorspule und die Stösselspule, welche nahe beieinander angeordnet sind, infolge einer Verbiegung des Stössels berühren können, was eine Unterbrechung der Übertragung der Messdaten zur Folge hat und die Verfügbarkeit des elektromagnetischen Fügemoduls beeinträchtigt.
b. Auch wird durch den Wegfall der Nut im Stössel eine Abschirmung der induktiven Kopplung bei der Nahfeldtelemetrie vermieden, was die Übertragung der Messdaten und somit die die Verfügbarkeit des elektromagnetischen Fügemoduls weiter verbessert.
c. Zudem wird der Stössel in einem Gleitlager im Stator geführt und dazu muss gemäss der Lehre der Schrift WO2011009223A1 auch im Bereich der Stösselspule eine Führungsfläche mit hoher Präzision gefertigt werden, was aufwändig und teuer ist.
d. Und schliesslich steht am Stator, welcher den Stössel radial umschliesst, vergleichsweise mehr Platz für die Anordnung der sich über die gesamte Hublänge erstreckende Statorspule zur Verfügung. Dies ermöglicht eine konstruktiv einfache und kostengünstige Anordnung der Statorspule am Stator.

Vorteilhafte Weiterbildungen des erfindungsgemässen elektromechanischen Fügemoduls sind in den Unteransprüchen aufgeführt.

### Kurze Beschreibung der Zeichnungen

Im Folgenden wird die Erfindung an einem bevorzugten Ausführungsbeispiel unter Beizug der Figuren näher erklärt. Es zeigen
- Fig. 1: eine Ansicht eines Teils eines elektromechanischen Fügemoduls 1; und
- Fig. 2: eine schematische Darstellung eines Teils eines Stössels 30 mit einer Stösselspule 32 und eines Stators 20 mit einer Statorspule 22 und einer Transformatorspule 25 des elektromechanischen Fügemoduls 1 gemäss Fig. 1.

Gleiche Bezugszeichen der Figuren bezeichnen gleiche Gegenstände.

### Wege zur Ausführung der Erfindung

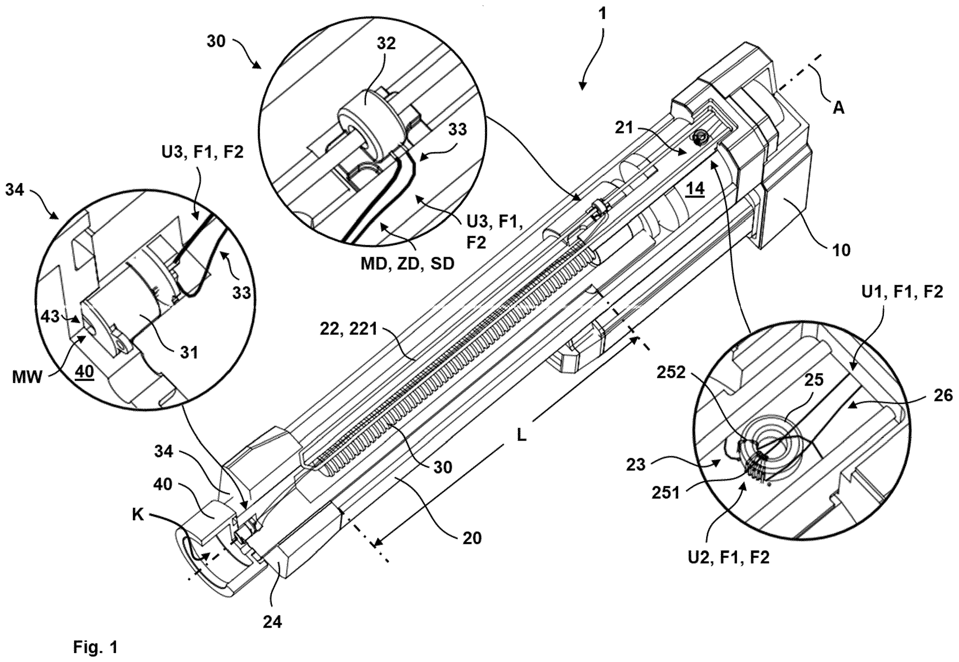

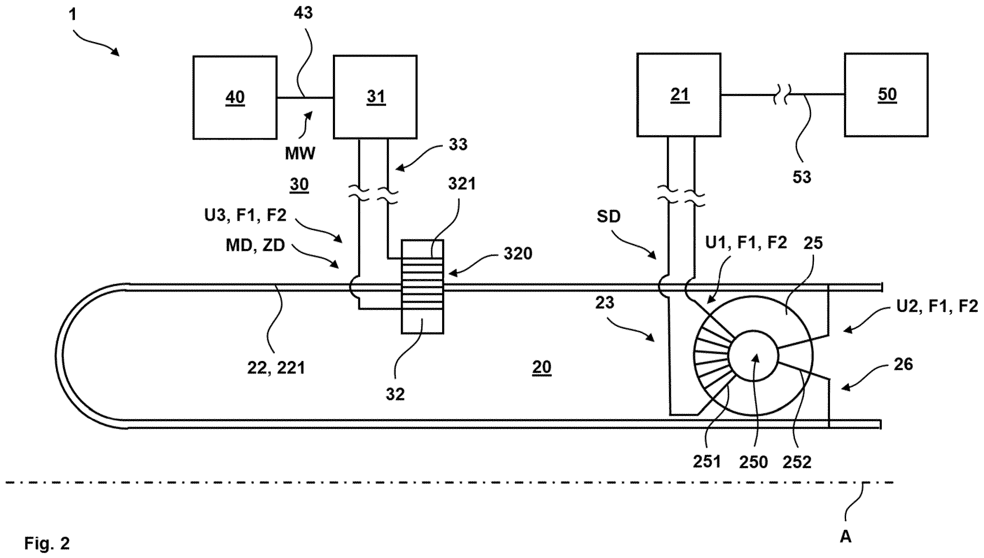

Fig. 1 zeigt eine Ansicht eines Teils eines elektromechanischen Fügemoduls 1. Das elektromechanische Fügemodul 1 weist eine Antriebseinheit 10, einen Stator 20, einen Stössel 30 und einen Kraftaufnehmer 40 auf. Details dazu sind einem linken, einem mittleren und einem rechten vergrösserten Ausschnitt der Fig. 1 zu entnehmen. Das elektromechanische Fügemodul 1 weist auch eine Auswerteeinheit 50 auf, welche in der schematischen Darstellung gemäss Fig.2 zu sehen ist.

Die Antriebseinheit 10 hat die Funktion, über den Stössel 30 eine Kraft K aufzubringen. Die Kraft K kann auf einen bildlich nicht dargestellten Fügekörper aufgebracht werden. Die Antriebseinheit 10 kann einen elektrischen Motor, einen Gewindetrieb, eine Bremse und eine Steuereinheit umfassen. Der elektrische Motor und der Gewindetrieb stehen in Wirkverbindung und eine Drehbewegung des elektrischen Antriebs wird vom Gewindetrieb in eine Linearbewegung gewandelt. Die Linearbewegung erfolgt entlang einer Längsachse A des elektromechanischen Fügemoduls 1. Das Aufbringen der Kraft K erfolgt durch die Linearbewegung. Durch die Linearbewegung kann eine sehr kleine Kraft K von einigen mN aber auch eine sehr grosse Kraft von mehreren 100 kN aufgebracht werden. Die Linearbewegung wird von der Steuereinheit gesteuert. Die Bremse kann die Linearbewegung abbremsen. Die Verfahrgeschwindigkeit von rund 400 mm/s erfolgt mit einer Wiederholgenauigkeit von 0.01 mm. Die Antriebseinheit 10 weist auf der Längsachse A ein Antriebseinheitsende 14 auf.

Der Stator 20 hat eine Gehäusefunktion und umgibt den Stössel 30 radial zumindest teilweise und schützt ihn so vor schädlichen Umwelteinflüssen wie Verunreinigungen (Staub, Feuchtigkeit, usw.). Der Stator 20 ist ortsfest. Der Begriff "ortsfest" bedeutet, dass der Stator 20 beim Verfahren des Stössels 30 seinen Ort beibehält. Somit wird der Stössel 30 relativ zum Stator 20 linear verfahren. Der Stator 20 weist ein von der Antriebseinheit 10 abgewandtes Statorende 24 auf.

Der Stössel 30 ist am Antriebseinheitsende 14 angebracht und wird mit der Linearbewegung verfahren. Der Stössel 30 kann über eine Hublänge L von mehreren 100 mm linear verfahren werden. Die Hublänge L erstreckt sich entlang der Längsachse A des elektromechanischen Fügemoduls 1. Im Ausführungsbeispiel der Fig. 1 erstreckt sich die Hublänge L vom Antriebseinheitsende 14 bis zum Statorende 24.

Der Stössel 30 weist ein von der Antriebseinheit 10 abgewandtes Stösselende 34 auf. Details zum Stösselende 34 sind dem linken vergrösserten Ausschnitt der Fig. 1 zu entnehmen. Der Stössel 30 bringt die Kraft K über das Stösselende 34 auf. Der Kraftaufnehmer 40 ist am Stösselende 34 angebracht.

Der Kraftaufnehmer 40 hat die Funktion, die vom Stössel 30 aufgebrachte Kraft K zu messen. Der Kraftaufnehmer 40 kann ein Dehnungsmessstreifen oder ein piezoelektrischer Sensor sein. Der Kraftaufnehmer 40 ist nicht auf die Messung einer Kraft K eingeschränkt. Er kann auch ein vom Stössel 30 aufgebrachtes Moment wie ein Biegemoment, ein Drehmoment, usw. messen. Er kann die Kraft K über mehrere Grössenordnungen messen. Der Kraftaufnehmer 40 kann eine Werkzeugaufnahme zur Befestigung eines bildlich nicht dargestellten Werkzeuges aufweisen. Der Kraftaufnehmer 40 wird mit dem Stössel 30 zusammen verfahren.

Der Stössel 30 weist eine Stösselelektronik 31 auf. Die Stösselelektronik 31 kann am Stösselende 34 angeordnet sein. Der Kraftaufnehmer 40 ist über mindestens eine Kraftaufnehmerleitung 43 mit der Stösselelektronik 31 elektrisch verbunden. Die Kraftaufnehmerleitung 43 besteht aus elektrisch leitfähigem Material wie Kupfer, usw. Das Ausführungsbeispiel der Fig. 1 weist mehrere drahtförmige Kraftaufnehmerleitungen 43 auf. Der Kraftaufnehmer 40 erzeugt für die gemessene Kraft K Messwerte MW. Die Messwerte MW sind analoge Signale wie elektrische Spannungen beim Dehnungsmessstreifen oder elektrische Ladungen beim piezoelektrischen Sensor. Der Kraftaufnehmer 40 überträgt die Messwerte MW über die Kraftaufnehmerleitung 43 zur Stösselelektronik 31. Die Stösselelektronik 31 ist geeignet, die Messwerte MW in Messdaten MD zu wandeln. Beim Wandeln der Messwerte MW in Messdaten MD verstärkt die Stösselelektronik 31 die Messwerte MW elektrisch und digitalisiert sie. Dabei verstärkt die Stösselelektronik 31 die Messwerte MW in einem Messbereich. Für die elektrische Verstärkung stellt die Stösselelektronik 31 einen von mehreren möglichen Messbereichen ein bzw. ändert einen eingestellten Messbereich. Die Messdaten MD sind digitale Daten. Die Messdaten MD haben eine Messgenauigkeit von kleiner/gleich 0.5 %.

Die Messdaten MD werden in der Auswerteeinheit 50 ausgewertet. Die Auswerteeinheit 50 kann entfernt vom elektromechanischen Fügemodul 1 angeordnet sein. In der schematischen Darstellung gemäss Fig. 2 ist die Auswerteeinheit 50 über eine Auswerteeinheitleitung 53 mit der Statorelektronik 21 elektrisch verbunden. Zur Auswertung werden die Messdaten MD zuerst von der Stösselelektronik 31 zur Statorelektronik 21 übertragen und von der Statorelektronik 21 werden sie zur Auswerteeinheit 50 übertragen. Die Übertragung der Messdaten MD vom Stössel 30 zum Stator 20 erfolgt per Nahfeldtelemetrie. Die Nahfeldtelemetrie ist ein aus den Normenreihen ISO/IEC 14443 oder ISO/IEC 15693 bekanntes Verfahren zur kontaktlosen Übertragung von digitalen Daten per elektromagnetische Induktion mittels Spulen.

Nachfolgend wird die induktive Kopplung der Spulen des Stössels 30 und des Stators 20 im Detail beschrieben.

Der Stator 20 weist eine Statorelektronik 21, eine Statorspule 22 und mindestens eine Statorleitung 23, 26 auf. Die Statorleitung 23, 26 besteht aus elektrisch leitfähigem Material wie Kupfer, usw. Vorzugsweise umfasst die Statorleitung 23, 26 eine erste Statorleitung 23 und eine zweite Statorleitung 26. Das Ausführungsbeispiel der Fig. 1 und 2 weist mehrere drahtförmige erste Statorleitungen 23 und mehrere drahtförmige zweite Statorleitungen 26 auf.

Die Nahfeldtelemetrie erfolgt mit mindestens einer Trägerfrequenz F1, F2. Vorzugsweise umfasst die Trägerfrequenz F1, F2 eine erste Trägerfrequenz F1 von 13.56 MHz und eine zweite Trägerfrequenz F2 im Bereich von 119 bis 135 kHz. Die Stösselelektronik 31 ist geeignet, die erste Trägerfrequenz F1 zu erzeugen. Die Statorelektronik 21 ist geeignet, die zweite Trägerfrequenz F2 zu erzeugen.

Vorzugsweise weist der Stator 20 eine Transformatorspule 25 auf. Details zur Transformatorspule 25 sind dem rechten vergrösserten Ausschnitt der Fig. 1 zu entnehmen. Vorzugsweise ist die Statorelektronik 21 über die erste Statorleitung 23 mit der Transformatorspule 25 elektrisch verbunden.

Die Statorelektronik 21 ist geeignet, eine elektrische Wechselspannung mit der zweiten Trägerfrequenz F2 zu erzeugen. Die elektrische Wechselspannung liegt über die erste Statorleitung 23 an der Transformatorspule 25 an. Nachfolgend wird die elektrische Wechselspannung auch elektrische Primärspannung U1 der Statorelektronik 21 genannt. Die elektrische Primärspannung U1 kann im Bereich von 10 bis 20 V sein.

Vorzugsweise ist die Transformatorspule eine Ringkernspule mit einem Ringkern aus magnetischem Material wie Eisen, Ferrit, usw. Der Ringkern der Transformatorspule 25 weist eine zentrale Durchgangsöffnung 250 auf. Die zentrale Durchgangsöffnung 250 der Transformatorspule 25 erstreckt sich senkrecht zur Längsachse A des elektromechanischen Fügemoduls 1. Die Transformatorspule 25 weist Transformatorspulenwindungen 251, 252 auf. Die Transformatorspulenwindungen 251 252, bestehen aus elektrisch leitfähigem Material wie Kupfer, usw. Vorzugsweise umfassen die Transformatorspulenwindungen 251, 252 erste Transformatorspulenwindungen 251 und zweite Transformatorspulenwindungen 252. Die Anzahl der ersten Transformatorspulenwindungen 251 kann im Bereich von fünf bis zehn sein. Die Anzahl der zweiten Transformatorspulenwindungen 252 kann im Bereich von eins bis fünf sein. Vorzugsweise ist die Anzahl der zweiten Transformatorspulenwindungen 252 gleich eins. Die ersten Transformatorspulenwindungen 251 sind mit der ersten Statorleitung 23 elektrisch verbunden. Die zweiten Transformatorspulenwindungen 252 sind mit der zweiten Statorleitung 26 elektrisch verbunden.

Die Transformatorspule 25 hat die Funktion eines Transformators. Die Transformatorspule 25 ist geeignet, über das Verhältnis der Anzahl der ersten Transformatorspulenwindungen 251 zur Anzahl der zweiten Transformatorspulenwindungen 252 die elektrische Primärspannung U1 in eine elektrische Sekundärspannung U2 zu transformieren. Die elektrische Sekundärspannung U2 kann im Bereich von 1 bis 2 V sein. Die elektrische Sekundärspannung U2 weist die zweite Trägerfrequenz F2 der elektrische Primärspannung U1 auf.

Die Statorspule 22 und die Transformatorspule 25 sind nahe zueinander angeordnet. Die nahe Anordnung der Statorspule 22 und der Transformatorspule 25 beträgt einige mm bis zu einigen cm.

Die Statorspule 22 besteht aus elektrisch leitfähigem Material wie Aluminium, Messing, Stahl, usw. Die Statorspule 22 ist elektrisch isoliert am Stator 20 befestigt. Vorzugsweise weist die Statorspule 22 eine einzige Statorspulenwindung 221 auf. Vorzugsweise hat die Statorspule 22 die Form eines Hufeisens, mit zwei langen Seiten und mit einer kurzen Seiten. Die zwei langen Seiten erstrecken sich parallel zur Längsachse A des elektromechanischen Fügemoduls 1.

Die Transformatorspule 25 und die Statorspule 22 sind über die zweite Statorleitung 26 elektrisch verbunden. Die elektrische Sekundärspannung U2 liegt somit an der Statorspule 22 an.

Die elektrische Sekundärspannung U2 erzeugt in der Statorspule 22 einen elektrischen Wechselstrom. Der elektrische Wechselstrom bildet ein Magnetfeld. Die Feldlinien des Magnetfeldes verlaufen kreisförmig um die Statorspulenwindung 221.

Der Stössel 30 weist eine Stösselspule 32 auf. Die Stösselspule 32 bleibt beim linearen Verfahren nahe der Statorspule 22 angeordnet. Die Distanz der nahen Anordnung von Stösselspule 32 und Statorspule 22 beträgt einige mm bis zu einigen cm.

Details zum Stösselspule 32 sind dem mittleren vergrösserten Ausschnitt der Fig. 1 zu entnehmen. Vorzugsweise ist auch die Stösselspule 32 eine Ringkernspule mit einem Ringkern aus magnetischem Material wie Eisen, Ferrit, usw. Der Ringkern der Stösselspule 32 weist eine zentrale Durchgangsöffnung 320 auf. Die zentrale Durchgangsöffnung 320 der Stösselspule 32 erstreckt sich parallel zur Längsachse A des elektromechanischen Fügemoduls 1. Die Stösselspule 32 weist mehrere Stösselspulenwindungen 321 auf. Die Stösselspulenwindungen 321 bestehen aus elektrisch leitfähigem Material wie Kupfer, usw. Die Anzahl der Stösselspulenwindungen 321 kann im Bereich von fünf bis zehn sein. Vorzugsweise ist die Anzahl der ersten Transformatorspulenwindungen 251 gleich der Anzahl der Stösselspulenwindungen 321.

Die Statorspule 22 und die Stösselspule 32 haben die Funktion, eine induktive Kopplung miteinander einzugehen. Dazu sind die Statorspule 22 und die Stösselspule 32 derart zueinander angeordnet, dass die Stösselspule 32 die Windung 221 der Statorspule 22 in einer Ebene senkrecht zur Längsachse A bereichsweise vollständig umschliesst. Im Ausführungsbeispiel gemäss Fig. 1 und 2 ragt die Statorspulenwindung 221 durch die zentrale Durchgangsöffnung 320 der Stösselspule 32.

Bei einer Ringkernspule verlaufen die Feldlinien eines Magnetfeldes kreisförmig im Inneren der Ringkernspule. Somit verlaufen die Feldlinien des Magnetfeldes der Statorspule 22 genau dort, wo auch die Feldlinien eines Magnetfeldes der Stösselspule 32 verlaufen, was eine optimale induktive Kopplung bewirkt.

Die Statorspule 22 und die Stösselspule 32 sind somit geeignet, mit der elektrischen Sekundärspannung U2 der Statorspule 22 in der Stösselspule 32 eine elektrische Wechselspannung U3 mit der zweiten Trägerfrequenz F2 der elektrischen Sekundärspannung U2 zu induzieren.

Die Statorspule 22 und die Stösselspule 32 haben auch die Funktion eines Transformators. Die Statorspule 22 und die Stösselspule 32 sind geeignet, die elektrische Sekundärspannung U2 der Statorspule 22 in eine elektrische Wechselspannung U3 in der Stösselspule 32 zu transformieren. Das Verhältnis der Anzahl der Statorspulenwindung 221 zur Anzahl der Stösselspulenwindungen 321 transformiert die elektrische Sekundärspannung U2 der Statorspule 22 in die elektrische Wechselspannung U3 der Stösselspule 32. Bei gleicher Anzahl der ersten Transformatorspulenwindungen 251 und der Stösselspulenwindungen 321 ist die elektrische Wechselspannung U3 der Stösselspule 32 weitgehend gleich der elektrischen Primärspannung U1 der Transformatorspule 25.

Die Stösselspule 32 ist über mindestens eine Stösselleitung 33 mit der Stösselelektronik 31 elektrisch verbunden. Die Stösselleitung 33 besteht aus elektrisch leitfähigem Material wie Kupfer, usw. Die Stösselleitung 33 ist mit den Stösselwindungen 321 der Stösselspule 32 elektrisch verbunden. Die Stösselelektronik 31 ist geeignet, die erste Trägerfrequenz F1 zu erzeugen. Die Messdaten MD werden durch Modulation der ersten Trägerfrequenz F1 in die elektrische Wechselspannung U3 der Stösselspule 32 eingebracht. Verschiedene Modulationsverfahren sind möglich, wie Phasenmodulation, Frequenzmodulation, usw. Vorzugsweise wird Phasenmodulation verwendet. Es ist die Stösselelektronik 31, welche geeignet ist, die Messdaten MD durch Phasenmodulation der ersten Trägerfrequenz F1 der elektrischen Wechselspannung U3 der Stösselspule 32 in die elektrische Primärspannung U1 einzubringen. Die erste Trägerfrequenz F1 wird dann durch Transformation von der elektrischen Wechselspannung U3 in die elektrische Sekundärspannung U2 eingebracht und von der elektrischen Sekundärspannung U2 wird die erste Trägerfrequenz F1 durch Transformation die elektrische Primärspannung U1 eingebracht. Und es ist die Statorelektronik 21, welche geeignet ist, die phasenmodulierte erste Trägerfrequenz F1 der elektrischen Primärspannung U1 zu demodulieren und so die Messdaten MD der elektrischen Primärspannung U1 zu entnehmen. Zur Auswertung werden die Messdaten MD von der Statorelektronik 21 zur Auswerteeinheit 50 übertragen.

Die induktive Kopplung zwischen der Statorspule 22 und der Stösselspule 32 wird auch zur Übertragung von Zusatzdaten ZD von der Stösselelektronik 31 zur Statorelektronik 21 verwendet. Zusatzdaten ZD sind mindestens eine der folgenden Informationen über die Stösselelektronik 31 und den Kraftaufnehmer 40: eine Angabe der Empfindlichkeit des Kraftaufnehmers 40, oder eine Angabe über den Messbereich der Stösselelektronik 31, in welchem Messbereich die Stösselelektronik 31 die Messwerte MW beim Wandeln verstärkt. Die Stösselelektronik 31 ist geeignet, die Zusatzdaten ZD durch Phasenmodulation der ersten Trägerfrequenz F1 der elektrischen Wechselspannung U3 der Stösselspule 32 in die elektrische Primärspannung U1 einzubringen. Die Statorelektronik 21 ist geeignet, die phasenmodulierte erste Trägerfrequenz F1 der elektrischen Primärspannung U1 zu demodulieren und so die Zusatzdaten ZD der elektrischen Primärspannung U1 zu entnehmen. Zur Auswertung werden die Zusatzdaten ZD von der Statorelektronik 21 zur Auswerteeinheit 50 übertragen.

Die induktive Kopplung zwischen der Statorspule 22 und der Stösselspule 32 wird auch zur Übertragung von elektrischer Energie von der Statorelektronik 21 zur Stösselelektronik 31 verwendet. Dazu ist die Stösselelektronik 31 geeignet, die elektrische Wechselspannung U3 der Stösselspule 32 zu entnehmen und zur Energieversorgung der Stösselelektronik 31 bzw. des Kraftaufnehmers 40 zu verwenden.

Die induktive Kopplung zwischen der Statorspule 22 und der Stösselspule 32 wird auch zur Übertragung von Steuerdaten SD von der Statorelektronik 21 zur Stösselelektronik 31 verwendet. Die Steuerdaten SD sind digitale Daten. Mit den Steuerdaten SD lässt sich der Betrieb der Stösselelektronik 31 steuern. So kann sich die Stösselelektronik 31 mit den Steuerdaten SD ein- und ausschalten. Auch kann die Stösselelektronik 31 mit den Steuerdaten SD einen Messbereich einstellen bzw. ändern, in welchem Messbereich die Stösselelektronik 31 die Messwerte MW beim Wandeln verstärkt. Dazu ist die Statorelektronik 21 geeignet, Steuerdaten SD durch Phasenmodulation der zweiten Trägerfrequenz F2 der elektrischen Primärspannung U1 in die elektrische Wechselspannung U3 der Stösselspule 32 einzubringen. Die Stösselelektronik 31 ist geeignet, die phasenmodulierte zweite Trägerfrequenz F2 der elektrischen Wechselspannung U3 der Stösselspule 32 zu demodulieren und so die Steuerdaten SD der elektrischen Wechselspannung U3 der Stösselspule 32 zu entnehmen und zum Betrieb der Stösselelektronik 31 zu verwenden.

### Bezugszeichenliste

- 1: elektromechanisches Fügemodul
- 10: Antriebseinheit
- 14: Antriebseinheitsende
- 20: Stator
- 21: Statorelektronik
- 22: Statorspule
- 221: Statorspulenwindung
- 23: erste Statorleitung
- 24: Statorende
- 25: Transformatorspule
- 250: zentrale Durchgangsöffnung der Transformatorspule
- 251: erste Transformatorspulenwindungen
- 252: zweite Transformatorspulenwindungen
- 26: zweite Statorleitung
- 30: Stössel
- 31: Stösselelektronik
- 32: Stösselspule
- 33: Stösselleitung
- 34: Stösselende
- 320: zentrale Durchgangsöffnung der Stösselspule
- 321: Stösselspulenwindungen
- 40: Kraftaufnehmer
- 43: Kraftaufnehmerleitung
- 50: Auswerteeinheit
- 53: Auswerteeinheitleitung
- A: Längsachse
- F1: erste Trägerfrequenz
- F2: zweite Trägerfrequenz
- K: Kraft
- L: Hublänge
- MD: Messdaten
- MW: Messwerte
- SD: Steuerdaten
- U1: elektrische Primärspannung
- U2: elektrische Sekundärspannung
- U3: elektrische Wechselspannung
- ZD: Zusatzdaten

## Patentansprüche

1. Elektromechanisches Fügemodul (1) zum Aufbringen einer Kraft (K); mit einer Antriebseinheit (10) und einem Stössel (30), welcher Stössel (30) an der Antriebseinheit (10) angebracht ist und von der Antriebseinheit (10) linear verfahrbar ist; mit einem Kraftaufnehmer (40), welcher am Stössel (30) angebracht ist und die aufgebrachte Kraft (K) misst und für die gemessene Kraft Messwerte (MW) erzeugt, mit einem Stator (20), welcher ortsfest ist, welcher Stössel (30) und welcher Kraftaufnehmer (40) relativ zum Stator (20) über eine Hublänge (L) linear verfahrbar sind; welcher Stössel (30) eine Stösselelektronik (31) und eine Stösselspule (32) aufweist; welcher Stator (20) eine Statorelektronik (21) und eine Statorspule (22) aufweist; welche Stösselspule (32) beim linearen Verfahren nahe der Statorspule (22) angeordnet bleibt; welche Stösselelektronik (31) und welche Statorelektronik (21) geeignet sind, die Messwerte (MW) als Messdaten (MD) per Nahfeldtelemetrie von der Stösselspule (32) zur Statorspule (22) zu übertragen; **dadurch gekennzeichnet, dass** sich die Statorspule (22) über die gesamte Hublänge (L) erstreckt.

2. Elektromechanisches Fügemodul (100) nach Anspruch 2, **dadurch gekennzeichnet, dass** die Statorspule (22) eine einzige Statorspulenwindung (221) aufweist.

3. Elektromechanisches Fügemodul (100) nach Anspruch 2, **dadurch gekennzeichnet, dass** die Stösselspule (32) die Statorspulenwindung (221) in einer Ebene senkrecht zur Hublänge (L) bereichsweise vollständig umschliesst.

4. Elektromechanisches Fügemodul (100) nach einem der Ansprüche 2 bis 3, **dadurch gekennzeichnet, dass** die Stösselspule (32) eine Ringkernspule ist, welche Ringkernspule eine zentrale Durchgansöffnung 320 aufweist; und dass die Statorspulenwindung (221) durch die zentrale Durchgangsöffnung 32 der Stösselspule (32) ragt.

5. Elektromechanisches Fügemodul (100) nach einem der Ansprüche 2 bis 4, **dadurch gekennzeichnet, dass** der Stator (20) eine Transformatorspule (25) aufweist; dass die Statorelektronik (21) geeignet ist, eine elektrische Primärspannung (U1) zu erzeugen; dass die elektrische Primärspannung (U1) an der Transformatorspule (25) anliegt; und dass die Transformatorspule (25) geeignet ist, die elektrische Primärspannung (U1) in eine elektrische Sekundärspannung (U2) zu transformieren.

6. Elektromechanisches Fügemodul (100) nach Anspruch 5, **dadurch gekennzeichnet, dass** die Transformatorspule (25) eine Ringkernspule ist; dass die Transformatorspule (25) erste Transformatorspulenwindungen (251) und zweite Transformatorspulenwindungen (252) aufweist; und dass das Verhältnis der Anzahl der ersten Transformatorspulenwindungen (251) zur Anzahl der zweiten Transformatorspulenwindungen (252) die elektrische Primärspannung (U1) in die elektrische Sekundärspannung (U2) transformiert.

7. Elektromechanisches Fügemodul (100) nach einem der Ansprüche 2 bis 6, **dadurch gekennzeichnet, dass** die Statorelektronik (21) geeignet ist, eine elektrische Primärspannung (U1) zu erzeugen; dass an der Statorspule (22) eine elektrische Sekundärspannung (U2) anliegt; und dass die Statorspule (22) und die Stösselspule (32) geeignet sind, mit der elektrischen Sekundärspannung (U2) der Statorspule (22) in der Stösselspule (32) eine elektrische Wechselspannung (U3) zu induzieren.

8. Elektromechanisches Fügemodul (100) nach Anspruch 7, **dadurch gekennzeichnet, dass** die Statorspule (22) und die Stösselspule (32) geeignet sind, die elektrische Sekundärspannung (U2) in eine elektrische Wechselspannung (U3) zu transformieren.

9. Elektromechanisches Fügemodul (100) nach Anspruch 8, **dadurch gekennzeichnet, dass** die Stösselspule (32) mehrere Stösselspulenwindungen (321) aufweist; und dass das Verhältnis der Anzahl der Statorspulenwindung (221) zur Anzahl der Stösselspulenwindungen (321) die elektrische Sekundärspannung (U2) der Statorspule (22) in die elektrische Wechselspannung (U3) der Stösselspule (32) transformiert.

10. Elektromechanisches Fügemodul (100) nach einem der Ansprüche 7 bis 9, **dadurch gekennzeichnet, dass** die elektrische Wechselspannung (U3) der Stösselspule (32) eine erste Trägerfrequenz (F1) aufweist; dass der Kraftaufnehmer (40) über eine Kraftaufnehmerleitung (43) mit der Stösselelektronik (31) elektrisch verbunden ist und die Messwerte (MW) über die Kraftaufnehmerleitung (43) zur Stösselelektronik (31) übermittelt; dass die Stösselelektronik (31) geeignet ist, die Messwerte (MW) in Messdaten (MD) zu wandeln und die Messdaten (D) durch Modulation der ersten Trägerfrequenz (F1) der elektrischen Wechselspannung (U3) der Stösselspule (32) in die elektrische Primärspannung (U1) einzubringen; und dass die Statorelektronik (21) geeignet ist, die modulierte erste Trägerfrequenz (F1) der elektrischen Primärspannung (U1) zu demodulieren und so die Messdaten (MD) der elektrischen Primärspannung (U1) zu entnehmen.

11. Elektromechanisches Fügemodul (100) nach Anspruch 10, **dadurch gekennzeichnet, dass** die Stösselelektronik (31) geeignet ist, Zusatzdaten (ZD) durch Modulation der ersten Trägerfrequenz (F1) der elektrischen Wechselspannung (U3) der Stösselspule (32) in die elektrische Primärspannung (U1) einzubringen; und dass die Statorelektronik (21) geeignet ist, die modulierte erste Trägerfrequenz (F1) der elektrischen Primärspannung (U1) zu demodulieren und so die Zusatzdaten (ZD) der elektrischen Primärspannung (U1) zu entnehmen.

12. Elektromechanisches Fügemodul (100) nach Anspruch 11, **dadurch gekennzeichnet, dass** die Zusatzdaten (ZD) mindestens eine der folgenden Informationen über die Statorelektronik (31) und den Kraftaufnehmer (40) sind: eine Angabe der Empfindlichkeit des Kraftaufnehmers (40), oder eine Angabe über den Messbereich der Statorelektronik (31), in welchem Messbereich die Statorelektronik (31) die Messwerte (MW) beim Wandeln verstärkt.

13. Elektromechanisches Fügemodul (100) nach einem der Ansprüche 1 bis 12, **dadurch gekennzeichnet, dass** die Statorelektronik (21) geeignet ist, über die Statorspule (22) in der Stösselspule (32) eine elektrische Wechselspannung (U3) zu induzieren; und dass die Stösselelektronik (31) geeignet ist, die elektrische Wechselspannung (U3) der Stösselspule (32) zu entnehmen und zur Energieversorgung der Stösselelektronik (31) bzw. des Kraftaufnehmers (40) zu verwenden.

14. Elektromechanisches Fügemodul (100) nach Anspruch 13, **dadurch gekennzeichnet, dass** die elektrische Primärspannung (U1) und die elektrische Wechselspannung (U3) der Stösselspule (32) eine zweite Trägerfrequenz (F2) aufweisen; dass die Statorelektronik (21) geeignet ist, Steuerdaten (SD) durch Modulation der zweiten Trägerfrequenz (F2) der elektrischen Primärspannung (U1) in die elektrische Wechselspannung (U3) der Stösselspule (32) einzubringen; und dass die Stösselelektronik (31) geeignet ist, die modulierte zweite Trägerfrequenz (F2) der elektrischen Wechselspannung (U3) der Stösselspule (32) zu demodulieren und so die Steuerdaten (SD) der elektrischen Wechselspannung (U3) der Stösselspule (32) zu entnehmen und zum Betrieb der Stösselelektronik (31) zu verwenden.

15. Elektromechanisches Fügemodul (100) nach Anspruch 14, **dadurch gekennzeichnet, dass** sich die Stösselelektronik (31) mit den Steuerdaten (SD) ein- und ausschaltet oder dass die Stösselelektronik (31) mit den Steuerdaten (SD) einen Messbereich einstellt bzw. ändert, in welchem Messbereich die Stösselelektronik (31) die Messwerte (MW) beim Wandeln verstärkt.

## Claims

1. Electromechanical joining module (1) for applying a force (K); comprising a drive unit (10) and a tappet (30), which tappet (30) is attached to the drive unit (10) and can be moved by the drive unit (10) in a linear manner; comprising a force transducer (40), which is attached to the tappet (30) and measures the applied force (K) and generates measured values (MW) for the measured force, comprising a stator (20), which is stationary, which tappet (30) and which force transducer (40) can be moved in a linear manner relative to the stator (20) over a stroke length (L); which tappet (30) comprises tappet electronics (31) and a tappet coil (32); which stator (20) comprises stator electronics (21) and a stator coil (22); which tappet coil (32) remains in a close arrangement with respect to the stator coil (22) in the course of linear movement; which tappet electronics (31) and which stator electronics (21) are suitable for transmitting the measured values (MW) as measured data (MD) from the tappet coil (32) to the stator coil (22) by near-field telemetry; **characterized in that** the stator coil (22) extends over the entire stroke length (L).

2. Electromechanical joining module (100) according to claim 2, **characterized in that** said stator coil (22) comprises a single stator coil winding (221).

3. Electromechanical joining module (100) according to claim 2, **characterized in that** said tappet coil (32) completely surrounds the stator coil winding (221) in a plane perpendicular to the stroke length (L) in certain regions.

4. Electromechanical joining module (100) according to any of the claims 2 to 3, **characterized in that** said tappet coil (32) is a toroidal core coil, which toroidal core coil comprises a central through-hole 320; and **in that** the stator coil winding (221) projects through the central through-hole 32 of the tappet coil (32).

5. Electromechanical joining module (100) according to any of the claims 2 to 4, **characterized in that** said stator (20) comprises a transformer coil (25); **in that** the stator electronics (21) is suitable for generating an electrical primary voltage (U1); **in that** the electrical primary voltage (U1) is applied to the transformer coil (25); and **in that** the transformer coil (25) is suitable for transforming the electrical primary voltage (U1) into a electrical secondary voltage (U2).

6. Electromechanical joining module (100) according to claim 5, **characterized in that** said transformer coil (25) is a toroidal core coil; **in that** the transformer coil (25) comprises first transformer coil windings (251) and second transformer coil windings (252); and **in that** the ratio of the number of first transformer coil windings (251) to the number of second transformer coil windings (252) transforms the electrical primary voltage (U1) into the electrical secondary voltage (U2).

7. Electromechanical joining module (100) according to any of the claims 2 to 6, **characterized in that** said stator electronics (21) is suitable for generating an electrical primary voltage (U1); **in that** an electrical secondary voltage (U2) is present at the stator coil (22); and **in that** said stator coil (22) and tappet coil (32) are suitable for inducing an electrical alternating voltage (U3) in the tappet coil (32) with the electrical secondary voltage (U2) of the stator coil (22).

8. Electromechanical joining module (100) according to claim 7, **characterized in that** said stator coil (22) and tappet coil (32) are suitable for transforming the electrical secondary voltage (U2) into an electrical alternating voltage (U3).

9. Electromechanical joining module (100) according to claim 8, **characterized in that** said tappet coil (32) comprises a plurality of tappet coil windings (321); and **in that** the ratio of the number of stator coil windings (221) to the number of tappet coil windings (321) transforms the electrical secondary voltage (U2) of the stator coil (22) into the electrical alternating voltage (U3) of the tappet coil (32).

10. Electromechanical joining module (100) according to any of the claims 7 to 9, **characterized in that** said electrical alternating voltage (U3) of the tappet coil (32) comprises a first carrier frequency (F1); **in that** the force transducer (40) is electrically connected to the tappet electronics (31) via a force transducer line (43) and transmits the measured values (MW) to the tappet electronics (31) via the force transducer line (43); **in that** the tappet electronics (31) is suitable for converting the measured values (MW) into measured data (MD) and for introducing the measured data (D) into the electrical primary voltage (U1) by modulating the first carrier frequency (F1) of the electrical alternating voltage (U3) of the tappet coil (32); and **in that** the stator electronics (21) is suitable for demodulating the modulated first carrier frequency (F1) of the electrical primary voltage (U1) and thus for extracting the measured data (MD) from the electrical primary voltage (U1).

11. Electromechanical joining module (100) according to claim 10, **characterized in that** said tappet electronics (31) is suitable for introducing additional data (ZD) into the electrical primary voltage (U1) by modulating the first carrier frequency (F1) of the electrical alternating voltage (U3) of the tappet coil (32); and **in that** the stator electronics (21) is suitable for demodulating the modulated first carrier frequency (F1) of the electrical primary voltage (U1) and thus extracting the additional data (ZD) from the electrical primary voltage (U1).

12. Electromechanical joining module (100) according to claim 11, **characterized in that** said additional data (ZD) are at least one of the following information about the stator electronics (31) and the force transducer (40): a specification of the sensitivity of the force transducer (40), or a specification with respect to the measuring range of the stator electronics (31), in which measuring range the stator electronics (31) amplifies the measured values (MW) in the course of conversion.

13. Electromechanical joining module (100) according to any of the claims 1 to 12, **characterized in that** said stator electronics (21) is suitable for inducing an electrical alternating voltage (U3) in the tappet coil (32) via the stator coil (22); and **in that** the tappet electronics (31) is suitable for extracting the electrical alternating voltage (U3) from the tappet coil (32) and using it to supply power to the tappet electronics (31) or the force transducer (40), respectively.

14. Electromechanical joining module (100) according to claim 13, **characterized in that** said electrical primary voltage (U1) and the electrical alternating voltage (U3) of the tappet coil (32) comprise a second carrier frequency (F2); **in that** the stator electronics (21) is suitable for introducing control data (SD) into the electrical alternating voltage (U3) of the tappet coil (32) by modulating the second carrier frequency (F2) of the electrical primary voltage (U1); and **in that** the tappet electronics (31) is suitable for demodulating the modulated second carrier frequency (F2) of the electrical alternating voltage (U3) of the tappet coil (32) and thus extracting the control data (SD) from the electrical alternating voltage (U3) of the tappet coil (32) and using it to operate the tappet electronics (31).

15. Electromechanical joining module (100) according to claim 14, **characterized in that** said tappet electronics (31) can be switched on and off by means of the control data (SD) or **in that** the tappet electronics (31) sets or changes, respectively, a measuring range with the control data (SD), in which measuring range the tappet electronics (31) amplifies the measured values (MW) in the course of conversion.

## Revendications

1. Module d'assemblage électromécanique (1) pour l'application d'une force (K) ; comprenant une unité d'entraînement (10) et un poussoir (30), lequel poussoir (30) est fixé à l'unité d'entraînement (10) et peut être déplacé linéairement par l'unité d'entraînement (10) ; comprenant un capteur de force (40) qui est fixé au poussoir (30) et mesure la force (K) appliquée et génère des valeurs de mesure (MW) pour la force mesurée ; comprenant un stator (20) qui est fixe, dans lequel ledit poussoir (30) et ledit capteur de force (40) pouvant être déplacés de manière linéaire par rapport au stator (20) sur une longueur de course (L) ; lequel poussoir (30) comprend une électronique de poussoir (31) et une bobine de poussoir (32) ; lequel stator (20) comprend une électronique de stator (21) et une bobine de stator (22) ; laquelle bobine de poussoir (32) reste en disposition proche avec la bobine de stator (22) lors du mouvement linéaire ; dans lequel l'électronique de poussoir (31) et l'électronique de stator (21) sont adaptées à la transmission des valeurs de mesure (MW) sous forme de données de mesure (MD) de la bobine de poussoir (32) à la bobine de stator (22) par l'intermédiaire de télémétrie en champ proche ; **caractérisé en ce que** la bobine de stator (22) s'étendant sur toute la longueur de course (L).

2. Module d'assemblage électromécanique (100) selon la revendication 2, **caractérisé en ce que** ladite bobine de stator (22) comprend une seule spire (221) de bobine de stator.

3. Module d'assemblage électromécanique (100) selon la revendication 2, **caractérisé en ce que** ladite bobine de poussoir (32) entoure complètement la spire (221) de bobine de stator dans un plan perpendiculaire à la longueur de course (L) dans certaines zones.

4. Module d'assemblage électromécanique (100) selon l'une quelconque des revendications 2 à 3, **caractérisé en ce que** ladite bobine de poussoir (32) est une bobine à noyau toroïdal, ladite bobine à noyau toroïdal comportant un trou traversant central 320 ; et **en ce que** la spire (221) de la bobine statorique dépasse le trou traversant central 32 de la bobine de poussoir (32).

5. Module d'assemblage électromécanique (100) selon l'une quelconque des revendications 2 à 4, **caractérisé en ce que** ledit stator (20) comprend une bobine de transformateur (25) ; **en ce que** l'électronique de stator (21) est adaptée à la génération d'une tension électrique primaire (U1) ; **en ce que** ladite tension électrique primaire (U1) est appliquée à la bobine de transformateur (25) ; et **en ce que** la bobine de transformateur (25) est adaptée à la transformation de la tension électrique primaire (U1) en une tension électrique secondaire (U2).

6. Module d'assemblage électromécanique (100) selon la revendication 5, **caractérisé en ce que** ladite bobine de transformateur (25) est une bobine à noyau toroïdal ; **en ce que** la bobine de transformateur (25) comprend des premières spires (251) de bobine de transformateur et des deuxièmes spires (252) de bobine de transformateur; et **en ce que** le rapport du nombre des premières spires (251) de bobine de transformateur au nombre des deuxièmes spires (252) de bobine de transformateur transforme la tension électrique primaire (U1) en la tension électrique secondaire (U2).

7. Module d'assemblage électromécanique (100) selon l'une quelconque des revendications 2 à 6, **caractérisé en ce que** ladite électronique de stator (21) est adaptée à la génération d'une tension électrique primaire (U1) ; **en ce qu'**une tension électrique secondaire (U2) est présente à la bobine de stator (22) ; et **en ce que** ladite bobine de stator (22) et ladite bobine de poussoir (32) sont adaptées à l'induction d'une tension électrique alternative (U3) dans la bobine de poussoir (32) avec la tension électrique secondaire (U2) de la bobine de stator (22).

8. Module d'assemblage électromécanique (100) selon la revendication 7, **caractérisé en ce que** ladite bobine de stator (22) et ladite bobine de poussoir (32) sont adaptées à la transformation de la tension secondaire électrique (U2) en une tension alternative électrique (U3).

9. Module d'assemblage électromécanique (100) selon la revendication 8, **caractérisé en ce que** ladite bobine de poussoir (32) comprend une pluralité de spires (321) de bobine de poussoir ; et **en ce que** le rapport entre le nombre des spires (221) de la bobine de stator et le nombre des spires (321) de la bobine de poussoir transforme la tension secondaire électrique (U2) de la bobine de stator (22) en la tension alternative électrique (U3) de la bobine de poussoir (32).

10. Module d'assemblage électromécanique (100) selon l'une quelconque des revendications 7 à 9, **caractérisé en ce que** ladite tension alternative électrique (U3) de la bobine de poussoir (32) comprend une première fréquence porteuse (F1) ; **en ce que** le capteur de force (40) est connecté électriquement à l'électronique de poussoir (31) par une ligne de capteur de force (43) et transmet les valeurs de mesure (MW) à l'électronique de poussoir (31) sur ladite ligne de capteur de force (43) ; **en ce que** l'électronique de poussoir (31) est adaptée à convertir les valeurs de mesure (MW) en données de mesure (MD) et pour introduire les données de mesure (D) dans la tension électrique primaire (U1) en modulant la première fréquence porteuse (F1) de la tension électrique alternative (U3) de la bobine de poussoir (32) ; et **en ce que** l'électronique de stator (21) est adaptée à démoduler la première fréquence porteuse (F1) modulée de la tension électrique primaire (U1) et à extraire ainsi les données de mesure (MD) de la tension électrique primaire (U1).

11. Module d'assemblage électromécanique (100) selon la revendication 10, **caractérisé en ce que** ladite électronique de poussoir (31) est adaptée à l'introduction de données supplémentaires (ZD) dans la tension électrique primaire (U1) par modulation de la première fréquence porteuse (F1) de la tension électrique alternative (U3) de la bobine de poussoir (32) ; et **en ce que** l'électronique de stator (21) est adaptée à démoduler la première fréquence porteuse (F1) modulée de la tension électrique primaire (U1) et à extraire ainsi les données supplémentaires (ZD) de la tension électrique primaire (U1).

12. Module d'assemblage électromécanique (100) selon la revendication 11, **caractérisé en ce que** lesdites données supplémentaires (ZD) sont au moins l'une des informations suivantes concernant l'électronique de stator (31) et le capteur de force (40) : une spécification de la sensibilité du capteur de force (40) ou une spécification relative à la plage de mesure de l'électronique de stator (31), dans quelle plage de mesure l'électronique de stator (31) amplifie les valeurs de mesure (MW) lors de la conversion.

13. Module d'assemblage électromécanique (100) selon l'une quelconque des revendications 1 à 12, **caractérisé en ce que** ladite électronique de stator (21) est adaptée à l'induction d'une tension électrique alternative (U3) dans la bobine de poussoir (32) par la bobine de stator (22) ; et **en ce que** l'électronique de poussoir (31) est adaptée à extraire la tension alternative électrique (U3) de la bobine de poussoir (32) et l'utiliser pour l'alimentation électrique respectivement de l'électronique de poussoir (31) ou du capteur de force (40).

14. Module d'assemblage électromécanique (100) selon la revendication 13, **caractérisé en ce que** ladite tension électrique primaire (U1) et ladite tension alternative électrique (U3) de la bobine de poussoir (32) comprennent une seconde fréquence porteuse (F2) ; **en ce que** l'électronique de stator (21) est adaptée à l'introduction des données de commande (SD) dans la tension alternative électrique (U3) de la bobine de poussoir (32) en modulant la seconde fréquence porteuse (F2) de la tension électrique primaire (U1) ; et **en ce que** l'électronique de poussoir (31) est adaptée à démoduler la seconde fréquence porteuse (F2) modulée de la tension alternative électrique (U3) de la bobine de poussoir (32) et à extraire ainsi les données de commande (SD) de la tension alternative électrique (U3) de la bobine de poussoir (32) et les utiliser pour actionner l'électronique de poussoir (31).

15. Module d'assemblage électromécanique (100) selon la revendication 14, **caractérisé en ce que** ladite électronique de poussoir (31) peut être activée et désactivée au moyen des données de commande (SD) ou **en ce que** l'électronique de poussoir (31) règle ou varie, respectivement, une plage de mesure à l'aide des données de commande (SD) dans quelle plage de mesure l'électronique de poussoir (31) amplifie les valeurs de mesure (MW) lors de la conversion.
